# EUROPÄISCHE PATENTSCHRIFT

(11) **EP 0 364 699 B1**
(45) Veröffentlichungstag und Bekanntmachung des Hinweises auf die Patenterteilung: **07.09.1994**
(21) Anmeldenummer: 89115620.0
(22) Anmeldetag: 24.08.1989
(51) Int. Cl.: F16L 55/128, F16L 55/136, F16B 39/02

(54) **Verfahren zum dichten Verschliessen und Bohrungsanordnung**
Method for sealing a bore, and sealed bore
Méthode pour obturer de façon étanche un orifice, et orifice obturé

(30) Priorität: 16.09.1988 DE 3831523
(43) Veröffentlichungstag der Anmeldung: 25.04.1990
(73) Patentinhaber: KOENIG VERBINDUNGSTECHNIK AG, CH-8953 Dietikon (CH)
(72) Erfinder: Staubli, Willi, CH-5313 Klingnau (CH)
(74) Vertreter: Troesch, Jacques J., Dr. sc. nat.

(56) Entgegenhaltungen:
- EP-A- 0 163 252
- WO-A-85/04235
- CH-A- 503 923
- CH-A- 508 828
- DE-B- 1 525 720
- DE-U- 7 338 267
- GB-A- 1 236 338
- GB-A- 2 094 928
- US-A- 3 525 453

## Beschreibung

Die vorliegende Erfindung betrifft ein Verfahren zum dichten Verschliessen einer Bohrung, bei dem man einen im wesentlichen büchsen- oder rohrförmigen Stopfen in die Bohrung einlässt, dann die Stopfenwandung in einem Dichtbereich radial aufweitet zum Erhalt eines dichten Sitzes des Stopfens in der Bohrung und den Stopfen in einem abgesetzten Sicherungsbereich bezüglich der Bohrung gegen axiale Verschiebung verankert, sowie eine dicht verschlossene Bohrungsanordnung, bei der ein im wesentlichen büchsen- oder rohrförmiger Stopfen mit einer radial gespreizten Axialpartie dicht und gegen axiale Verschiebung gesichert in der Bohrung liegt.

Derartige Vorgehen bzw. entsprechende Bohrungsanordnungen sind bekannt. Dabei wird durch radiales Aufsprengen des üblicherweise aus einem Metall, wie Stahl, gefertigten Stopfens ein Bohrungsverschluss erzielt, der insbesondere extrem hohen Drucken, z.B. weit über 1′OOO bar, gewachsen sein sollte. Der Aufbau einer solchen Bohrungsanordnung und das entsprechende Verfahren zum Verschliessen einer Bohrung durch Einlegen des Stopfens und Aufweiten sind sehr einfach und geniessen weite Verbreitung. Die Technik, auf welche sich gattungsmässig die vorliegende Erfindung bezieht, geht ab von Verschlusstechniken mit gummielastischen oder sonst elastischen Dichtungsorganen, die sich im Rahmen ihrer Elastizität an die Bohrungswandung legen oder gepresst werden. Diese Verschlusstechniken sind gerade wegen des Vorsehens elastischer Dichtringe kompliziert, und es lassen sich damit nicht den Drucken in obgenannter Grössenordnung gewachsene Verschlüsse erzielen oder nur mit entsprechendem Aufwand bei Hintereinanderschalten mehrerer Dichtstellen. Eine solche Verschlusstechnik mit eigens hierfür vorgesehenen Dichtungsringen ist beispielsweise aus der GB-A- 2 020 774 bekannt, weiter auch grundsätzlich aus der DE-OS 2 706 337 sowie der DE-PS 3 308 043, bei der die Dichtung mit Hilfe eines Dichtringes erzielt wird. Im weiteren ist es bekannt, Bohrungen durch Einschweissen von Verschlussstopfen zu verschliessen, wie beispielsweise gemäss der DE-OS 2 632 823 vorgeschlagen. Eine weitere Technik, eine Bohrung mittels eines gummielastischen Elementes zu verschliessen, ist aus der GB-PS 1 530 304 bekannt. Weitere Verschlusstechniken sind gezeigt in:
- US-PS 4 301 629, 4 295 578, 4 282 982, 4 254 899, 4 227 625, 4 214 672, 4 083 468, 4 002 516, 3 979 013, 3 895 466, 3 828 968, 3 144 162, Can.Pat. 865957, DE-PS 563 474, DE-OS 3 404 187, DE-AS 1 525 720, DE-PS 829 840, DE-OS 3 613 133, DE-PS 2 854 816, DE-OS 2 230 710.

Verfahren zum dichten Verschliessen bzw. entsprechend verschlossene Bohrungen, wobei ein Stopfen plastisch deformiert wird zum Erhalt eines dichten Sitzes in der Bohrung, d.h. der obgenannten Gattung mindestens ähnlich, sind beispielsweise bekannt aus der CH-PS 508 828, CH-PS 503 923, CH-PS 506 732, der DE-OS 2 457 407, der DE-OS 2 744 501, der DE-OS 2 632 823, der DE-OS 2 508 269, der US-PS 4 436 117 sowie der US-PS 4 425 943, DE-GM 7 338 267. So beschreibt die DE-OS 2 508 269 ein Verfahren, bei dem eine Vollkugel in eine Bohrung gepresst wird, welch letztere nachmals verstemmt wird.

Bei anderen dieser Vorschläge wird ein Stopfen oder stopfenähnliches Element aus einem relativ harten Material, wie einem Metall, radial gespreizt, um den dichten Sitz zu realisieren. Dabei besteht das Problem, dass bei diesen Vorgehensweisen wohl die Dichtheit des Verschlusses gewährleistet wird, jedoch nicht mit Sicherheit verhindert werden kann, dass, insbesondere bei hoher Druckbelastung, das Verschlusselement, wenn auch dichtend, sich in der Bohrung axial verschiebt. Diese Gefahr ist um so mehr heimtückisch, als dass sie nicht an einem Druckabfall feststellbar ist, sondern erst wenn das Verschlusselement, durch den hohen Druck in der Bohrung getrieben, geschossartig wegfliegt.

So wird beispielsweise bei der CH-A-508 828 ein büchsen- oder rohrförmiges Stopfen mit am Aussenmantel vorgesehenen umlaufenden, im wesentlichen gleichförmigen Zähnen mittels eines Expanisonsorganes dichtend in die Bohrungswand getrieben. Je nach Material von Stopfen und Bohrungswand sowie auftretenden Drucken kann zwar Dichtheit nicht aber eine sichere Verankerung gewährleistet werden.

Bei der US-A-3 525 453 wird diesem Problem dadurch Rechnung getragen, dass der Stopfen am Ende der Eintreibsstrecke gegen eine Schulter zur Anlage gebracht und in dieser Stellung durch einen separaten Verriegelungsring gegen axiale Verschiebung gesichert wird.

Diese Lösung vermag zwar die Anforderungen zu erfüllen, ist aber sehr aufwendig (Lagerhaltung verschieden grosser Verriegelungsringe; obligatorisches Ausfräsen von Aufnahmenuten fÜr den Ring; präzise Vorarbeiten).

Es ist Aufgabe der vorliegenden Erfindung, an einem Verfahren bzw. einer Bohrungsanordnung der obgenannten Gattung dieses Problem auf einfachere Weise sicher zu lösen.

Dies wird beim Verfahren der eingangs genannten Art durch den Wortlaut von Anspruch 1 bzw. an einer Bohrungsanordnung der genannten Gattung bei deren Ausbildung nach dem Wortlaut von Anspruch 11 gelöst.

Durch Vornahme einer axial formschlüssigen Verankerung des Stopfens in der Bohrung wird von der Erkenntnis ausgegangen, dass der Stopfen wohl dichtend in der Bohrung sitzen kann, ohne dass dies aber seine mechanische Beweglichkeit relativ zur Bohrung mit Sicherheit sperren würde. Es sei hierzu an pneumatische Kolben erinnert. Gerade bei der vorgeschlagenen Technik, bei der im Rahmen der Plastizität des Stopfenmaterials die Dichtung erzielt wird, ist zu bedenken, dass, ohne Reissen oder Brechen des Stopfens, nicht beliebig grosse Aufspreizhube realisiert werden können, dass aber auch bei relativ grossen Stopfen und Bohrungstoleranz der mögliche Aufspreizhub durchaus genügen mag, eine sichere Dichtheit zu erzielen, jedoch nicht, um auch gleichzeitig die mechanische Verschiebbarkeit des Stopfens in der Bohrung mit Sicherheit zu unterbinden.

Dadurch dass der Stopfen an der Bohrung axial formschlüssig verankert wird, wird nun erreicht, dass die Herstellungstoleranzen für Stopfen und Bohrung wesentlich gelockert werden können, denn sie müssen lediglich noch den Anforderungen von Dichtheit genügen. Die formschlüssige Verankerung ihrerseits muss klarerweise den Dichtheitsanforderungen nicht genügen und kann somit spezifisch für die mechanische Arretierung ausgelegt sein, was toleranzunabhängiger ist.

Eine erste, höchst einfache Möglichkeit, den Stopfen in der Bohrung axial zu arretieren, besteht darin, nach dem Wortlaut von Anspruch 2 vorzugehen.

Eine weitere Möglichkeit gemäss Anspruch 3 besteht darin, ein Widerlager für den Stopfen vorzusehen, d.h. den Stopfen einzulassen in die Bohrung, dort dichtend aufzuspreizen und darnach beispielsweise eine Widerlagerplatte in die Bohrung über den Stopfen einzuschrauben, an welcher der Stopfen mit seiner aus der Bohrung weisenden Stirnfläche ansteht.

Eine weitere Möglichkeit ist die in Anspruch 4 festgelegte. Dabei muss bedacht werden, dass ohnehin in der einen oder andern Art und Weise der Stopfen in der Bohrung zum Erhalt der Dichtheit aufgeweitet werden muss. Diese Aufweitungshandlung kann nun auch dazu verwendet werden, die formschlüssige Verankerung wie in Anspruch 4 vorgeschlagen zu realisieren, d.h. gleichzeitig oder nacheinander die Dichtungsaufweitung und eine Aufweitung der Stopfenwandung in eine Einnehmung der Bohrungswandung hinein vorzunehmen, somit die formschlüssige Verankerung auch zu realisieren oder eine Verankerungspartie des Stopfens in die Wand der Bohrung einzupressen. Dabei muss bedacht werden, dass zur Realisierung der formschlüssigen Verankerung nicht wie für den Erhalt der Dichtheit entlang der ganzen Peripherie des Stopfens regelmässig ausgetrieben werden muss, sondern dass gezielt nur gewisse Peripherieabschnitte des Stopfens auswärtsgetrieben oder auswärtsgebogen werden müssen, um in die genannte Einnehmung oder die Bohrungswandung einzugreifen, womit im Rahmen der Materialplastizität wesentlich höhere radiale Hübe für die mechanische Arretierung realisierbar werden, ohne Beeinträchtigung der Stopfenmaterialintegrität.

Ein einfaches Vorgehen ergibt sich auch gemäss Anspruch 5, indem hier radial federnde Partien am Stopfen vorgesehen werden, derart, dass bei Einlegen des Stopfens in die Bohrung letztere entlang der Bohrungswandung, eingerückt, gleiten und in vorgegebener Höhe des Stopfens bezüglich der Bohrung in entsprechend vorgesehene Einnehmungen an der Bohrungswandung einrasten.

Derartige Federpartien können selbstverständlich mehrteilig am Stopfen angeordnet sein, beispielsweise in Form von federnd nach aussen getriebenen Kugelrastflächen oder Hakenrastflächen, wobei aber aus Gründen der Konstruktionsvereinfachung bevorzugt wird, die büchsenartige Stopfenwand in einem Endabschnitt axial zu schlitzen und damit radial federnde Partien zu realisieren.

Um dabei, und insbesondere bei Verwendung von relativ über einen grossen radialen Hub aufspreizbare Stopfenpartien oder bei Verwendung von federnden Elementen am Stopfen die Sicherheit zu erhöhen, kann, gemäss Wortlaut von Anspruch 6, nach Erstellen der axialen Arretierung zwischen Stopfen und Bohrung in den Stopfen ein Widerlagerelement eingebracht werden, welches eine radiale Einwärtsbewegung der arretierenden Partien am Stopfen nun verhindert: Das Widerlagerelement hält die genannten Partien in den Bohrungswandungseinnehmungen oder in der Bohrungswand oder presst sie gar dort hinein.

Bevorzugterweise wird nun weiter, wie das an und für sich bekannt ist, auch am erfindungsgemässen Vorgehen das Aufspreizen des Stopfens zum Erhalt der Dichtung, aber auch erfindungsgemäss allenfalls zum Erhalt der axialen Verankerung, mittels eines in den Stopfen getriebenen Expansionsorgans, beispielsweise einer Kugel oder eines Zapfens, vorgenommen.

Bedenkt man, dass dabei üblicherweise das Expansionsorgan im Stopfen verbleibt, eigentlich zu ihm gehört, und praktisch als Widerlager für die Dichtung bezüglich der Bohrungswandung wirkt, so ist ersichtlich, dass dann, wenn, gemäss Anspruch 8, nicht der Stopfen direkt, sondern das Expansionsorgan an der Bohrung gegen eine axiale Verschiebung gesichert wird, in diesem Sinne indirekt, auch der Stopfen dagegen gesichert ist, denn eine aus der Bohrung hinaus wirkende Druckbelastung treibt tendenziell dann den Stopfen gegen das an der Bohrung verankerte Expansionsorgan.

Bei Vorgehen nach Anspruch 8 wird somit eine weite Palette von Konstruktionsmöglichkeiten eröffnet, denn nun erfolgt eine andere Funktionsverteilung, indem der Stopfen für die Dichtheit, das Expansionsorgan für die Expansion und die axiale Verankerung auszulegen sind.

Eine höchst einfache Variante ergibt sich bei Vorgehen nach Anspruch 9 bzw. 10, gemäss welcher das Expansionsorgan in die bereits mit dem Stopfen versehene Bohrung eingeschraubt wird, der Stopfen gegengelagert wird und das Einschrauben des Expansionsorgans gleichzeitig den Stopfen aufspreizt zum Erhalt der Dichtung, und das vortreibende Einschrauben indirekt die axiale Arretierung des Stopfens über das Expansionsorgan ergibt.

Dabei kann es vorteilhaft sein, gemäss Wortlaut von Anspruch 11, durch Vorsehen einer geeigneten Schmierung oder Materialpaarung, wie zwischen expandierender Partie des Expansionsorgans und Stopfen, in seiner zu expandierenden Partie zu verhindern, dass bei Einschrauben des Expansionsorgans der Stopfen mitdreht.

Um im weiteren auch bezüglich Stopfen und Expansionsorgan die Herstellungstoleranz möglichst weit stecken zu dürfen, wird vorgeschlagen, gemäss Anspruch 12 das Expansionsorgan innen hohl auszubilden oder einseitig glockenförmig offen und wesentlich weiter als die Büchsenöffnung des Stopfens, um so das Expansionsorgan in den Stopfen eintreiben zu können.

Eine weitere Möglichkeit besteht nach Wortlaut von Anspruch 13 darin, am Stopfen und vorzugsweise wenigstens im Bereich des für die Dichtheit aufzuweitenden Abschnittes Widerlagerflächen, wie mit dem Stopfen einteilig,Spitzen oder gekantete Ringe, mit einer vorzugsweise achssenkrechten oder entsprechend der Verschlussbelastung zu ihr geneigten Widerlagerfläche, in die Bohrung einzupressen oder in einer Kreisnut am Stopfen beispielsweise gehärtete Federringe mit Aussenkante vorzusehen und letztere durch Aufspreizen zum Erhalt der axialen Verankerung in das weichere Wandungsmaterial einzupressen.

Je nach Einsatz wird dabei das vorgeschlagene Verfahren unter Verwendung eines Expansionsorgans durch Eindrücken dieses Organs in den Stopfen oder durch Einziehen realisiert. Im letzterwähnten Fall wird am büchsenartigen Stopfen, in der Basisfläche, eine Oeffnung vorgesehen, durch welche ein nachmals abbrechbarer Zuganker mit endständigem Expansionsorgan geführt wird und letzteres in den Stopfen hineingezogen wird.

Bevorzugte Bohrungsanordnungen bzw. spezifische Ausbildungen der Bohrung und/oder des Stopfens an einer solchen Bohrungsanordnung sind in den Ansprüchen 16 bis 27 spezifiziert.

Die Erfindung wird anschliessend beispielsweise anhand von Figuren erläutert.

Es zeigen:
- Fig. 1: eine Längsschnittdarstellung einer ersten Variante einer erfindungsgemässen Bohrungsanordnung mit entsprechender erfindungsgemäss ausgebildeter Bohrung bzw. erfindungsgemäss ausgebildetem Stopfen, wobei links der Stopfen nicht aufgespreizt, rechts aufgespreizt ist, auch zur Erläuterung des erfindungsgemässen Verfahrens,
- Fig. 2 bis 8: in Darstellungen analog zu derjenigen von Fig. 1, weitere Ausführungsvarianten der erfindungsgemässen Bohrungsanordnung, bzw. der hierzu erfindungsgemäss ausgestalteten Bohrung bzw. des hierzu erfindungsgemäss ausgestalteten Stopfens,
- Fig. 9a bis c: im Längsschnitt eine bevorzugte erfindungsgemässe Bohrungsanordnung mit entsprechend erfindungsgemässem Stopfen, wobei der Stopfen bei seinem sukzessiven Aufweiten dargestellt ist,

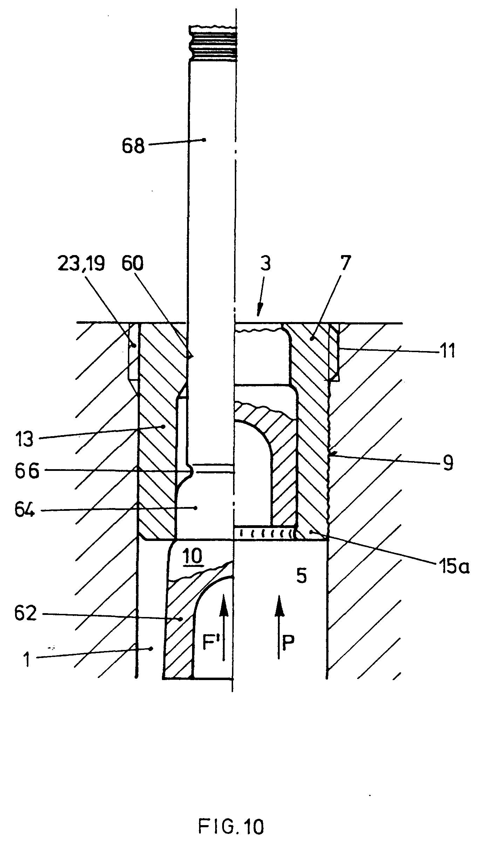

- Fig. 10 bis 13: in Darstellung analog zu Fig. 1 eine erfindungsgemässe Bohrungsanordnung mit entsprechend erfindungsgemäss ausgebildeter Bohrung bzw. Stopfen, bei welchem nach einer Variante des erfindungsgemässen Verfahrens der Stopfen durch Einziehen eines Expansionsorgans in den Stopfen plastisch verformt wird zum Erhalt der Bohrungsdichtung.

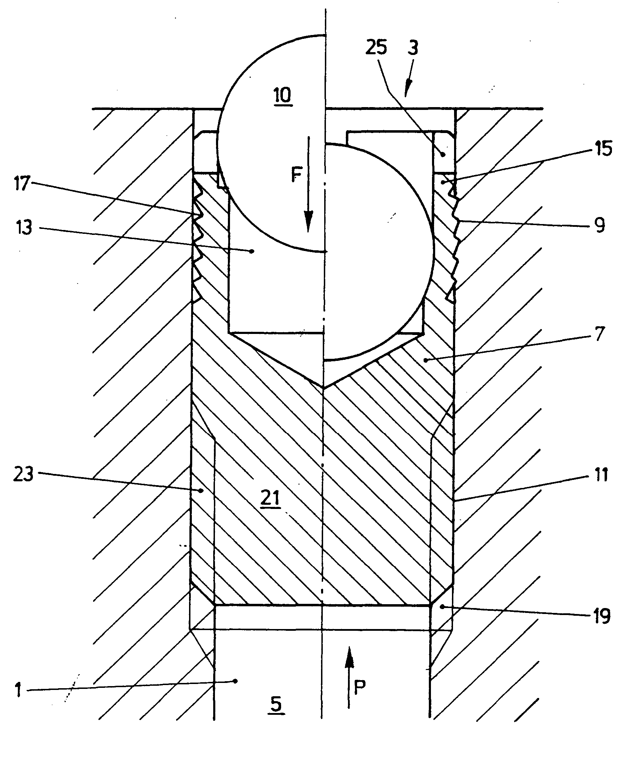

In Fig. 1 ist eine dichtend zu verschliessende Bohrung 1 dargestellt mit einer Mündung 3 gegen die Umgebung und mit einer Belastungsseite 5. In diese Bohrung 1 wird, von der Mündungsseite her, ein Stopfen 7 eingelassen, in noch zu beschreibender Art und Weise, um anschliessend an einer Dichtungspartie 9 radial durch plastische Verformung seines Materials gegen die Wandung der Bohrung 1 zum Erhalt eines dichten Sitzes aufgespreizt zu werden. Im weiteren ist eine Arretierungsanordnung 11 vorgesehen, welche axial den Stopfen 7 bezüglich der Bohrung 1 formschlüssig verankert.

Diese prinzipiell an allen erfindungsgemässen Bohrungsanordnungen bzw. für alle erfindungsgemässen Verfahren vorgesehenen Teile bzw. Funktionen, d.h. Bohrung 1 mit Mündung 3, Belastungsseite 5, Stopfen 7, Dichtungspartie 9 und Arretierungspartie 11 zwischen Bohrung und Stopfen, sind auch bei allen nachfolgend beschriebenen Ausführungsvarianten vorgesehen, in der einen oder anderen Ausführungsart, und werden deshalb auch in den anderen Ausführungsvarianten mit diesen Bezugszeichen versehen.

In Fig. 1 ist der Stopfen 7 büchsenförmig ausgebildet mit einer koaxialen Büchsenöffnung 13. An der Aussenseite der Büchsenwandung 15 ist eine Ringkerbung 17 vorgesehen mit mehreren, hintereinander angeordneten Kreisnuten bzw. dazwischenliegenden, im Querschnitt gezahnten Ausformungen. Diese Kerbungen 17 bilden bei dieser Ausführungsvariante die Dichtungspartie 9.

Die Arretierungspartie 11 umfasst einerseits, an der Bohrung 1, mit Abstand von ihrer Mündung 3, ein Innengewinde 19 sowie, an einer an die Büchsenöffnung 13 anschliessenden Partie 21 des Stopfens 7, ein Aussengewinde 23. Im weiteren umfasst der Stopfen 7 ein Expansionsorgan 10, hier als Kugel ausgebildet, deren Durchmesser etwas grösser ist als der Innendurchmesser der Büchsenöffnung 13, insbesondere auf der Höhe der Dichtungspartie 9.

Die dargestellte Bohrung 1 wird wie folgt dichtend verschlossen: Zuerst wird der Stopfen 7 mit seinem Aussengewinde 23 in das Innengewinde 19 der Bohrung 1 eingeschraubt, womit die axiale Arretierung zwischen Stopfen 7 und Bohrung 1 sichergestellt ist, jedoch noch keinesfalls eine Dichtheit. Dabei nimmt der Stopfen 7 die in dieser Figur links dargestellte Position ein. Anschliessend wird nun das Expansionsorgan 10, d.h. hier die Kugel, in der mit F dargestellten Richtung in die Büchsenöffnung 13 eingetrieben, bis sie die rechts in dieser Figur dargestellte Position einnimmt. Dadurch wird die Kerbung 17 in das Material der Wandung von Bohrung 1 eingepresst, durch plastische Aufweitung der Büchsenwandung 15 des Stopfens 7 und entsprechende plastische Verformung des Bohrungswandungsmaterials. Dadurch wird an der Dichtungspartie 9 der Bohrungsanordnung Dichtheit sichergestellt. Zum Erzielen dieser Dichtheit ist es, wie ersichtlich, nicht notwendig, dass die Kerbung 17, wie dargestellt, vollständig in das Wandungsmaterial der Bohrung eingetrieben wird. Es genügt bereits ein wesentlich geringfügigeres radiales Eintreiben, um die Dichtheit sicherzustellen, also ein Aufweitungsmass, das abhängig von den Bohrungstoleranzen sowie der Stopfentoleranzen, der verwendeten Materialien an Stopfen und Bohrung und somit von Fall zu Fall unterschiedlich ist, ohne dass aber dabei die Dichtheit negativ beeinflusst würde. Hingegen würde ein beispielsweise toleranzbedingtes, geringeres Eintreiben der Kerbung 17 in die Bohrungswandung die mechanische Blockierung von Stopfen 7 in Bohrung 1 nicht so sicherstellen, dass bei hohen Belastungsdrücken auf der Belastungsseite 5, beispielsweise wesentlich grösser als 1000 bar, allen falls bei mechanischen Erschütterungen der Anordnung, und/oder pulsierenden Drücken bzw. Temperaturschwankungen, mit der Zeit sich der Stopfen 7 nicht in Richtung der Mündung 3 verschieben könnte und schliesslich ausgestossen würde, wenn nicht, getrennt von der Dichtungspartie 9, eine formschlüssige axiale Verankerung zwischen Stopfen und Bohrung vorgesehen wäre, wie hier durch die beiden Gewinde 23 bzw. 19 realisiert.

Um den Stopfen 7 in die Bohrung 1 einzuschrauben, ist an seiner oberen Partie, in der Wandung 15 der Büchsenöffnung 13, beispielsweise ein Schlitz 25 zum Einführen eines Einschraubwerkzeuges vorgesehen.

Bereits hier wird deutlich, dass anstelle eines Gewindes zwischen Stopfen 7 und Bohrung 1 auch eine anders ausgebildete axiale Arretierung vorgesehen sein kann, wie beispielsweise eine bajonettverschlussartige Arretierung, bei welcher ein axial ausgelegter Schlitz in eine azimutal verlaufende Schlitzpartie übergeht, beispielsweise an der Bohrungswandung eingearbeitet oder aber an der Stopfenaussenwandung, und bei welcher, entsprechend an Bohrungswandung oder Stopfenaussenwandung, ein oder mehrere radial auskragende Stifte vorgesehen sind, die, wie von derartigen Bajonettverschlüssen bekannt, erst axial entlang im axialen Schlitz eingeführt werden, um dann azimutal in die azimutale Schlitzpartie eingedreht zu werden.

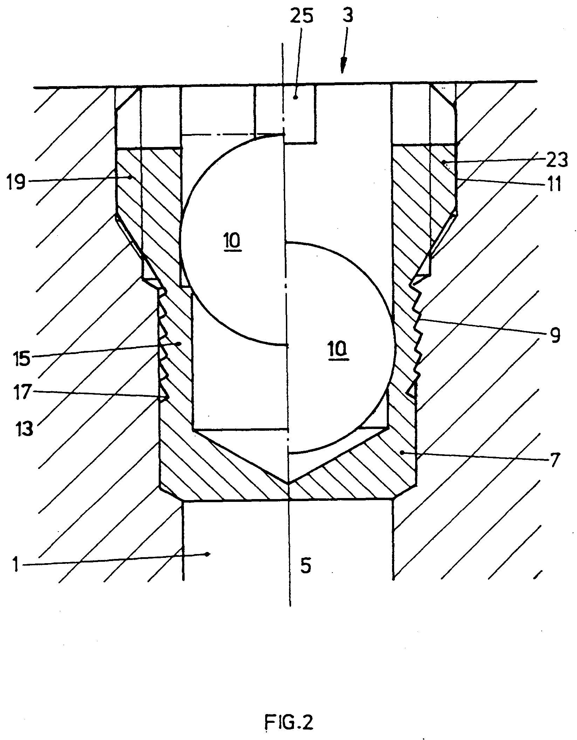

Die Anordnung gemass Fig. 2 ist prinzipiell gleich aufgebaut wie die eben beschriebene, mit dem Unterschied, dass hier die Büchsenöffnung 13 sich praktisch über die ganze Länge des Stopfens 7 erstreckt. Es sind hier Aussen- bzw. Innengewinde 23 und 19 oberhalb der Dichtungspartie 9 angeordnet, mit Bezug auf die Belastungsseite 5 der Bohrung 1, d.h. am Stopfen 7 ist das Aussengewinde an der Aussenseite der Büchsenwandung 15 aufgebracht. Bezüglich Erstellen des erfindungsgemässen Verschlusses und dessen Vorteile durch Trennen von Dichtungspartie 9 und Arretierungspartie 11 gelten die mit Bezug auf Fig. 1 gemachten Ausführungen.

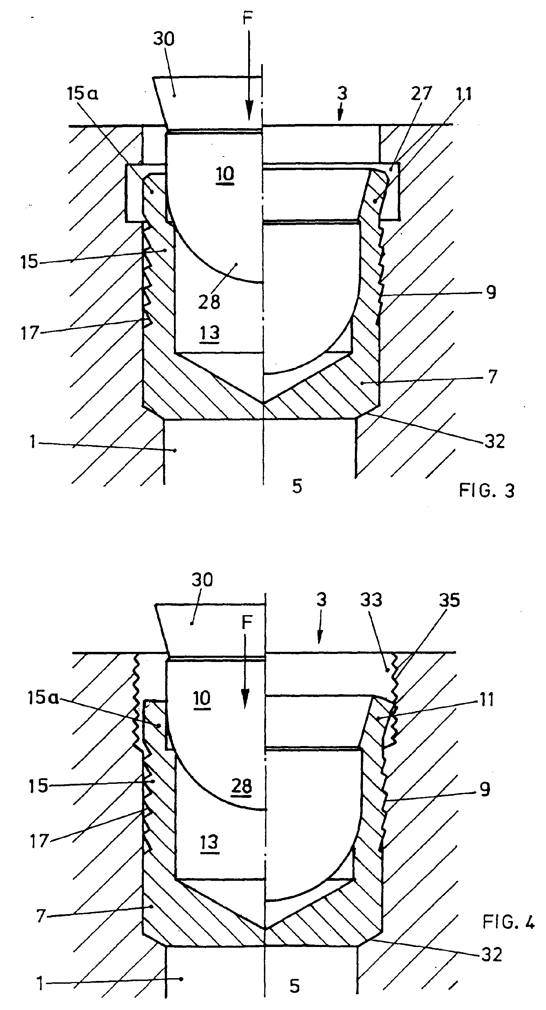

Bei der Ausführungsvariante gemäss Fig. 3 ist der Stopfen 7 über einen wesentlichen Teil seiner Axialausdehnung wiederum büchsenförmig ausgebildet mit der Büchsenöffnung 13. Die Kerbung 17 an der Aussenseite der Büchsenwandung 15 des Stopfens 7 bildet die stopfenseitigen Vorkehrungen zum Erstellen der Dichtheit an der Dichtungspartie 9. Im Bereich der Mündung 3 der Bohrung 1 ist erfindungsgemäss eine Ringnut 27 eingearbeitet. Diese Ringnut 27 bildet die bohrungsseitig vorgesehene Vorkehrung zur Bildung der Arretierungspartie 11. Das Expansionsorgan 10 ist hier als Zapfen mit kugelkalottenförmigem Abschluss 28 ausgebildet und weist, der Kugelkalotte 28 abgekehrt, eine koaxiale Kegelstumpffläche 30 auf.

Nachdem der Stopfen 7, gemäss Darstellung links, einfach in die Bohrung 1 eingelassen ist, wird das Expansionsorgan 10 in die Büchsenöffnung 13 des Stopfens 7 in Richtung F eingetrieben, womit in beschriebener Art und Weise, durch plastische Verformung des Materials von Wandung 15 sowie der Bohrungswandung, die Kerbung 17, den Toleranzverhältnissen entsprechend, in die Wandung eingetrieben wird und Dichtheit an der Dichtungspartie 9 sichergestellt wird. Bei Eintreiben in Richtung F des zapfenförmigen Expansionsorgans 10 kommt nun die Kegelstumpffläche 30 schliesslich in den Bereich der Endpartie 15a der Büchsenwandung 15. Dabei ist die Axialausdehnung des Stopfens, sofern bevorzugterweise an der Bohrung 1 eine Abstützschulter 32 vorgesehen ist, was zur Verhinderung des Einrutschens von Stopfen 7 weiter in die Bohrung 1 hinein bevorzugt wird, so dimensioniert, dass die Endpartie 15a, bei eingelegtem Stopfen 7, auf Höhe der Ringnut 27 liegt. Somit bewirkt nun das Eintreiben der Kegelstumpffläche 30 ein radiales Auswärtsspreizen dieser Endpartie 15a, womit diese die Ringnut 27 hintergreift. Damit ist die Arretierung an der Arretierungspartie 11 einerseits durch die erwähnte Ringnut 27, anderseits die aufgespreizte Büchsenwandungspartie 15a erstellt. Auch hier ist die Arretierungspartie 11 von Fertigungstoleranzen von Bohrung 1 und Stopfen 7 in weiten Grenzen unabhängig, und da, wie erläutert wurde, Erstellen nur von Dichtheit an der Dichtungspartie 9 ebenfalls in weiten Toleranzgrenzen gewährleistet ist, wird auch hier der Einsatz des Stopfens als Ganzes in weiten Grenzen unabhängig von Fertigungstoleranzen.

Im Unterschied zur Ausführungsvariante gemäss Fig. 3, bei der als Teil der Arretierungsanordnung 11 die Ringnut 27 in die Wandung der Bohrung 1 eingearbeitet werden muss, schlägt die Ausführungsvariante gemäss Fig. 4 vor, den Bohrungsdurchmesser endständig, d.h. in einer Partie 33 anschliessend an die Mündung 3, aufzuweiten. Diese Bohrungspartie 33 mit leicht vergrössertem Durchmesser weist eine aufgerauhte oder profilierte Wandung auf, ist vorzugsweise als leicht herzustellendes und in Fig. 4 schematisch dargestelltes Gewinde 35 ausgebildet. Bei Eintreiben der Kegelstumpffläche 30 des Expansionsorgans 10 wird wiederum die obere Büchsenwandungspartie 15a des Stopfens 7 radial auswärts gespreizt und in die Profilierung bzw. Aufrauhung an der Partie 33 der Bohrung eingepresst.

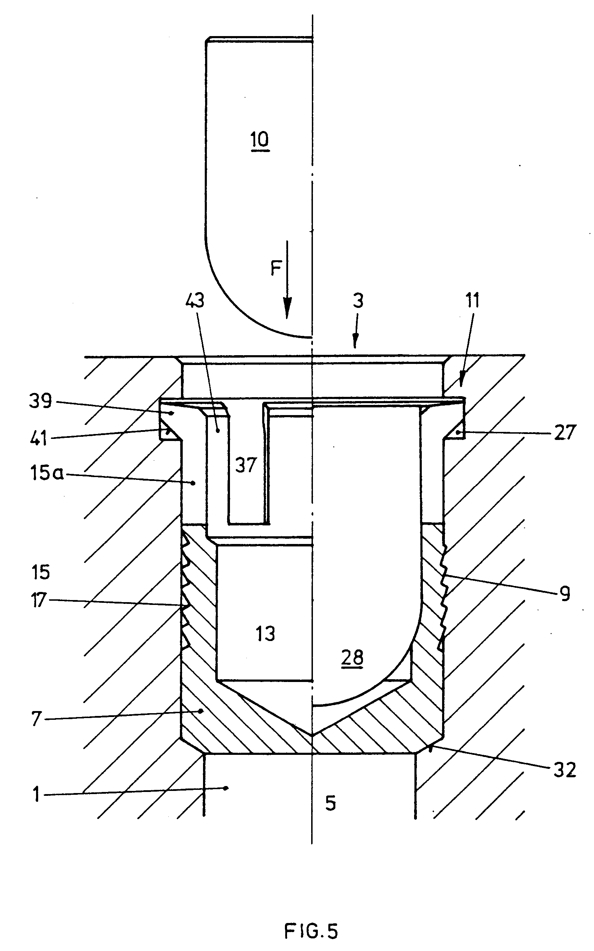

In Fig. 5 ist, ausgehend von der Ausführungsvariante gemäss Fig. 3, eine weitere Ausbildung dargestellt. Hier ist die obere Büchsenwandpartie 15a achsparallel geschlitzt, wie bei 37 dargestellt, womit der Stopfen 7 auf dieser Seite kronenartig ausgebildet ist. Die oberste Partie zwischen den Schlitzen 37 verbleibender Federlaschen 43 weist Auskragungen 39 auf, mit einer Kegelstumpffläche 41 als Führungsfläche. Das Expansionsorgan 10 seinerseits weist keine Kegelstumpffläche 30 gemäss Fig. 3 auf, sondern ist zylindrisch, mit Kugelkalotte 28 als Abschluss, ausgebildet.

Bei Einlegen des Stopfens 7 werden die zwischen den Schlitzen 37 gebildeten Federlaschen 43 mit den Auskragungen 39 federnd radial einwärts gespannt, bis der Stopfen 7 in die Position gebracht ist, auf der Schulter 32 ruhend, in welcher die Federlaschen 43 mit den Auskragungen 39 in die Ringnut 27 einschnappen. Damit ist die Arretierung an der Arretierungspartie 11 erstellt, einerseits realisiert durch die Nut 27, anderseits durch die Federlaschen 43 mit Auskragungen 39. Daraufhin wird das Expansionsorgan eingetrieben und treibt in beschriebener Art und Weise die Kerbung 17 in die Bohrungswandung. Gleichzeitig ergibt das Organ 10 mit seinem zylindrischen Abschnitt ein Widerlager für die Federlaschen 43, welche nun nicht mehr radial einwärts bewegt werden können, sondern starr mit ihren Auskragungen 39 in der Nut 27 gehaltert sind.

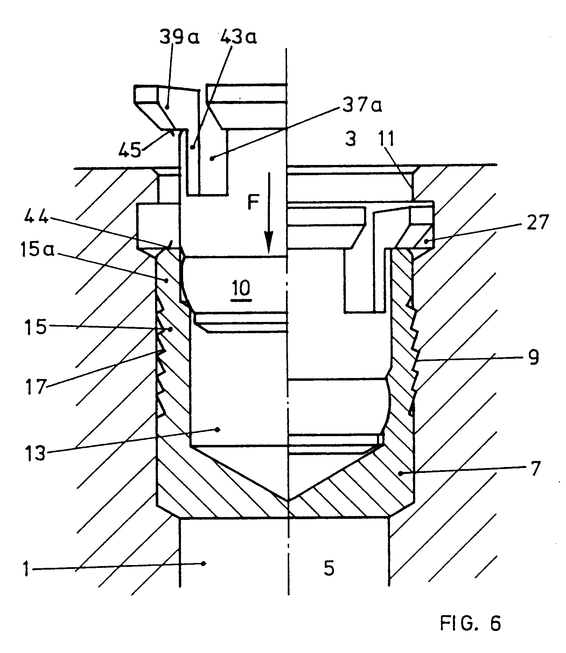

In der Ausführungsvariante gemäss Fig. 6 ist die Bohrung 1, wie bereits anhand von Fig. 3 bzw. 5 beschrieben wurde, mit der Ringnut 27 versehen. Im Unterschied zur Ausführungsvariante gemäss Fig. 5 weist der Stopfen 7 hier keine Krone mit Federlaschen 43 auf, sondern ist, wie in Fig. 3, als Büchse mit der Kerbung 17 ausgebildet. Es ist nun hier das Expansionsorgan 10, das die Kronenstruktur aufweist, nämlich an seinem oberen Teil büchsenförmig ausgebildet ist, mit Schlitzen 37a, wodurch Federlaschen 43a, mit daran vorgesehenen Auskragungen 39a, gebildet werden. Der untere Teil des Stopfens 10 ist bevorzugterweise aus Vollmaterial gebildet. Bei Eintreiben des Expansionsorgans 10 schnappen schliesslich die Federlaschen 43a mit ihren Auskragungen 39a in die Ringnut 27 ein, womit die Arretierung 11 hier durch formschlüssiges Hintergreifen von Partien des Expansionsorgans 10, nämlich der Federlaschen 43a, erstellt wird. Die Abschlussschulter 44 der oberen Wandungspartie 15a am Stopfen 7 ruht, nun auch axial arretiert, an einer Abstützfläche 45 der Auskragung 39a am Expansionsorgan 10.

Falls nötig, kann auch hier, in Analogie zu Fig. 5, bezüglich der Federlaschen 43a ein Widerlagerelement, nun aber in die Büchse am Expansionsorgan 10 eingetrieben werden.

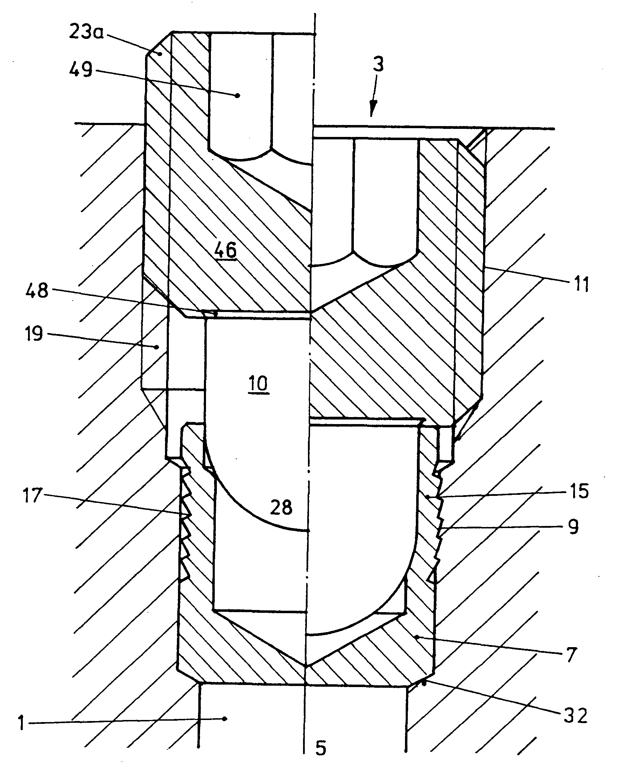

Bei der Ausführungsvariante gemass Fig. 7 ist der Stopfen 7 gleich wie beispielsweise in Fig. 6 dargestellt ausgebildet. Wie dies bereits anhand von Fig. 2 beschrieben wurde, weist auch hier der obere Abschnitt der Bohrung 1 ein Innengewinde 19 auf. Im Unterschied zur Ausführungsvariante gemäss Fig. 2 aber weist nicht der Stopfen 7 das entsprechende Aussengewinde auf, sondern es ist das Expansionsorgan 10 in seinem oberen Teil 46 im Durchmesser vergrössert und weist dort ein Aussengewinde 23a auf. Dabei ist der eigentliche expandierende Teil des Organs 10 wiederum zylinderförmig mit Kugelkalotte 28 ausgebildet, bevorzugterweise drehbar an Teil 46 gelagert oder daran abgestützt, wie bei 48 dargestellt.

Die Gleitfläche zwischen eigentlichem Expansionsteil mit Kugelkalotte 28 und Vortriebsteil 46 des Expansionsorgans 10 wird dabei bevorzugterweise aus einer Materialpaarung gefertigt, welche eine gute Gleitfähigkeit auch unter hohem Druck sicherstellt, wie mit Teflon oder Keramik, oder wird mit einem Gleitmittel versehen. Durch Einschrauben, wie mittels eines in eine Einformung 49 eingeführten Werkzeuges, wird das Expansionsorgan 1O in den bereits vorher eingelassenen Stopfen 7 vorgetrieben zur Erstellung der Dichtheit an Partie 9, wobei Innen-und Aussengewinde 19 bzw. 23a sowohl diesem Vortreiben wie auch der mechanischen Arretierung als Arretierungspartie 11 dienen.

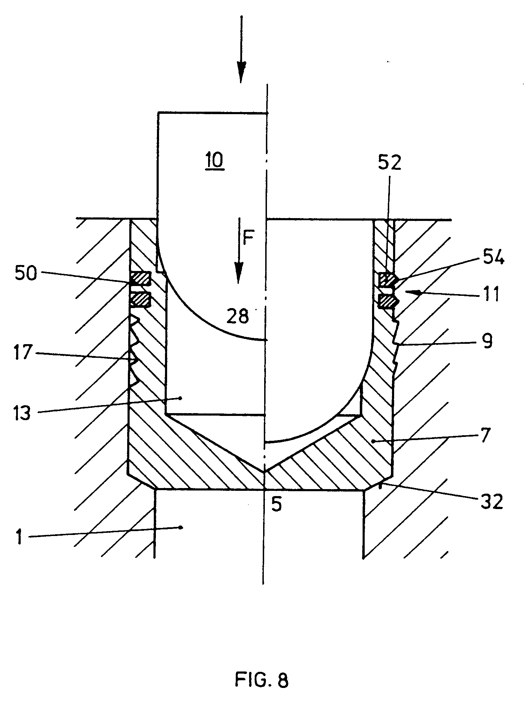

In der Ausführungsvariante gemäss Fig. 8 weist der Stopfen 7, wiederum büchsenförmig ausgebildet mit Büchsenöffnung 13, wiederum die Kerbung 17 zur Erstellung von Dichtheit an der Dichtungspartie 9 sowie nun weiter in Kreisnuten 50 eingelassene, geschlitzte und vergütete Schneidringe 52 auf. Diese weisen, radial nach aussen gekehrt, je mindestens eine scharfe Kante 54 auf. Bei Eintreiben des Expansionsorgans 10, wieder zylinderförmig mit Abschlusskugelkalotte 28 ausgebildet, werden, gleichzeitig mit dem Erstellen von Dichtheit an der Dichtungspartie 9, durch plastische Verformung der Stopfenwandungspartie im Bereich der Kreisnuten 50, die Federringe bzw. deren Kanten 54, wie erwähnt aus vergütetem und mithin hartem Material, in das Wandungsmaterial der Bohrung 1 eingetrieben, womit die mechanische, axiale Arretierung an der Arretierungspartie 11 sichergestellt ist.

Anstelle von Nuten mit Schneidringen können selbstverständlich auch fix an der Aussenwandung des Stopfens 7 angeordnete gehärtete Zähne am Umfang verteilt vorgesehen werden, die bei Eintreiben des Expansionsorgans 10 in die Bohrungswandung eingetrieben werden. Auch können derartige vergütete Vorsprünge in Form eines Aussengewindes am Stopfen 7 vorgesehen werden, mit grosser Gewindesteigung, derart, dass durch axiales Vortreiben des Expansionsorgans 10, durch Einpressen dieses vergüteten steilgängigen Gewindes in das Bohrungswandungsmaterial, der Stopfen 7 in seine endgültige Position gedreht wird. Es wirkt dann das Aussengewinde am Stopfen 7 praktisch als Gewindeschnittvorrichtung bezüglich der Bohrungswandung, wobei, wie erwähnt, bevorzugterweise der Antrieb über das axial vorgetriebene Expansionsorgan, allenfalls unter Drehen desselben, erfolgt.

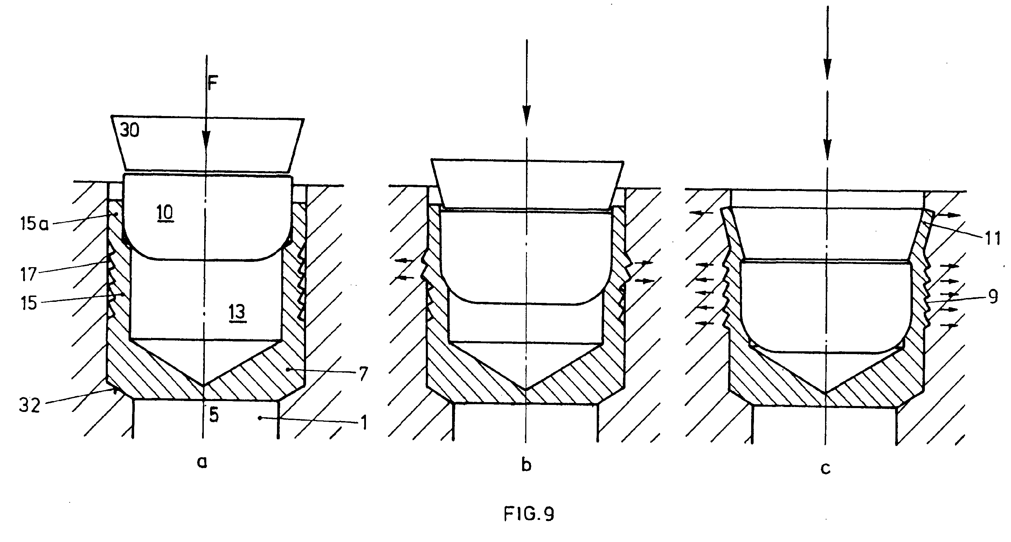

In Fig. 9 ist eine heute bevorzugte Ausführungsvariante der Bohrungsanordnung bzw. des erfindungsgemässen Erstellens des dichten Verschlusses dargestellt. Sie lehnt sich weitgehend an die Ausführungsvariante gemäss Fig. 3 an. Dort wurde als nachteilig befunden das zusätzliche Einarbeiten der Ringnut 27 in die Bohrungswandung 1. Aehnlich wie deshalb zur Ausführungsvariante von Fig. 4 geschritten wurde, wird nun hier keine Ringnut 27 in die Bohrung 1 eingearbeitet, sondern es wird, wie aus dem Vortriebablauf a) bis c) von Fig. 9 ersichtlich, die als scharfe Kante ausgebildete Abschlusspartie 15a der Büchsenwandung 15 von Stopfen 7 mit der Kegelstumpffläche 30 in das Wandungsmaterial der Bohrung 1 eingetrieben, womit ein widerhakenförmiges Hintergreifen des Stopfens 7 am Wandungsmaterial erfolgt.

Diese Ausführungsvariante hat den Vorteil, dass an der Bohrung keine zusätzlichen Arbeitsgänge, wie beispielsweise Gewindeschnitt oder Aufrauhen gemäss Fig. 4, notwendig sind.

Bei allen bis anhin beschriebenen Ausführungsvarianten wurde bei Erstellen der Dichtheit an Partie 9 ein Expansionsorgan 1O von der Mündungsseite 3 her in den Stopfen 7 eingetrieben. In gewissen Anwendungsfällen wird nun bevorzugt ein derartiges Expansionsorgan durch Zug von der Belastungsseite 5 her in den Stopfen getrieben. Die folgenden Beispiele zeigen derartige Ausführungsvarianten.

Gemäss Fig. 1O wird der wiederum büchsenförmige Stopfen 7, mit seiner Büchsenabschlusspartie 15a gegen die Belastungsseite 5 gerichtet, in die Bohrung 1 eingelassen. Dabei wird er zur Bildung der Arretierungspartie 11 mit einer Partie erhöhter Rauheit, wie mit einem Aussengewinde 23, in eine entsprechende Partie, allenfalls auch erhöhter Rauheit, wie mit Innengewinde 19 der Bohrung 1 eingelassen, so beim Setzvorgang eingepresst oder vorgängig eingeschraubt. In der Büchsenbodenpartie weist nun der Stopfen 7 eine Durchtrittsöffnung 6O auf. Das Expansionsorgan 1O umfasst einen bevorzugterweise kegelstumpfförmig ausgebildeten, endständigen Expansionsteil 62, daran anschliessend einen Verschlussteil 64 etwas verringerten Durchmessers für die Durchtrittsbohrung 6O und daran anschliessend, über eine Sollbruchstelle 66, einen Zuganker 68. Es wird der Zuganker 68 durch die Oeffnung 6O durchgeführt und das Expansionsorgan 1O durch Zug in Richtung F′ in die Büchse 13 am Stopfen 7 eingezogen, wodurch dessen Wandung, allenfalls aufgerauht, an die allenfalls auch aufgerauhte Bohrungswand radial angepresst wird zur Bildung der Dichtungspartie 9. Die Arretierungspartie 11 wird durch Ineinandergreifen der beiden Gewinde 19 und 23 gebildet. Nachdem das Expansionsorgan eingetreiben ist, wird der Zuganker 68 an der Sollbruchstelle 66 abgetrennt. Insbesondere bei diesen Ausführungsvarianten, wo das Expansionsorgan eingezogen wird, kann es erwünscht sein, den Expansionsteil 62 hohl auszubilden, um das Expansionsorgan, unter gleichmässiger Kaltverformung, in die Büchse 13 des Stopfens einzuziehen.

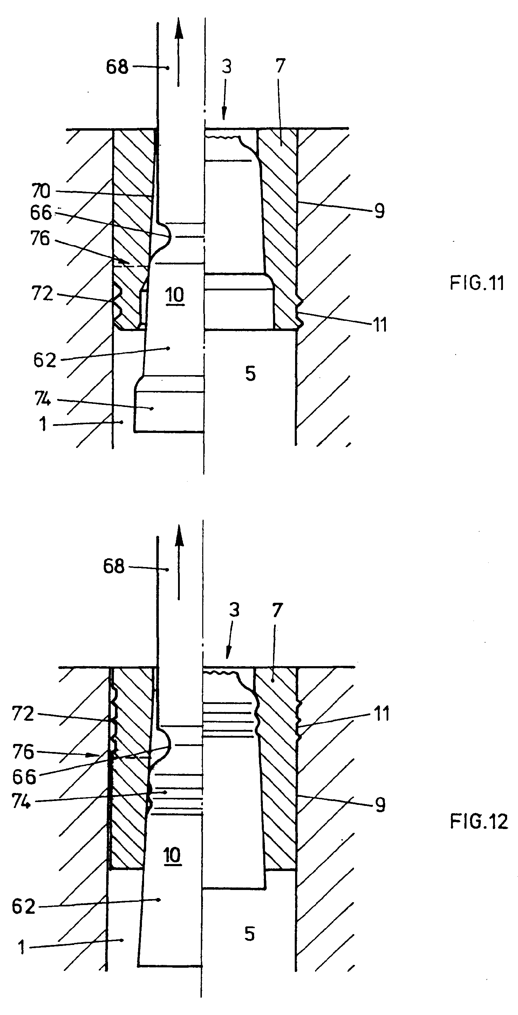

Bei der Ausführungsvariante gemäss Fig. 11 ist der Stopfen 7 weitgehend als Rohrstummel ausgebildet mit sich allenfalls kegelförmig verjüngender Innenfläche 7O. Am dann verjüngten Teil der Innenbohrung entgegengesetzten, endständigen Abschnitt von Stopfen 7 sind, an dessen Aussenwand, Zacken vorgesehen, vorzugsweise ringförmige Rippen 72 mit scharfen Kanten, die härter sind als das Wandungsmaterial der Bohrung. Das Expansionsorgan 1O weist wiederum den Zuganker 68 mit der Sollbruchstelle 66 und anschliessend einen sich kegelstumpfförmig verbreiternden eigentlichen Expansionsteil 62 auf, an welchen sich nun ein grösser-durchmessriger Vortriebsteil 74 anschliesst. Bei Einziehen des Expansionsorgans 1O tritt der kegelstumpfförmige Expansionsteil 62 in die kegelstumpfförmig sich verjüngende Innenbohrung des Stopfens 7 ein und presst auf einem axial ausgedehnten Abschnitt die Aussenwandung des Stopfens 7 an die Wandung der Bohrung 1, wodurch im Dichtungsbereich 9 Dichtheit erzielt wird. Allenfalls wird eine entsprechende Aufrauhung von Aussenfläche des Stopfens 7 bzw. Innenwandung der Bohrung 1 vorgenommen.

Ist das Expansionsorgan mit dem Expansionsteil 62 vollständig in den Stopfen 7 eingezogen, so liegt der Spreizteil 74 im unteren Abschnitt der Innenfläche 7O des Stopfens 7 und hat, durch Keilwirkung, die vergüteten Rippen 72, zur Bildung der Arretierungspartie 11, in das Wandungsmaterial eingetrieben. Dabei wird bevorzugt, wie bei 76 dargestellt, den unteren Teil des Stopfens 7 mit den vergüteten Rippen zu schlitzen, wodurch der mögliche Spreizhub dieser Partie zur Bildung der Arretierung 11 wesentlich vergrössert wird.

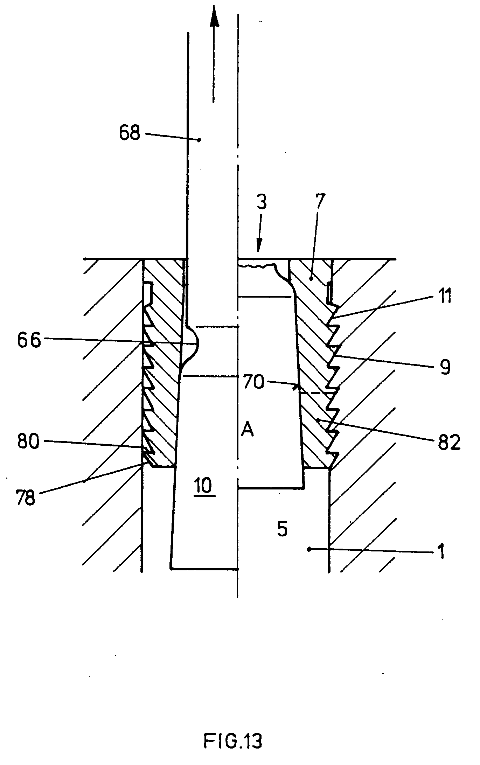

Im Unterschied zur Ausführungsvariante gemäss Fig. 11 ist bei derjenigen von Fig. 12 der Arretierungsbereich 11 mündungsseitig angeordnet mit Rippen oder Vorsprüngen 72 an einer bevorzugterweise ebenfalls, wie bei 76 angedeutet, geschlitzten mündungsseitigen Endpartie des Stopfens 7. Auch hier sind die Rippen bzw. Vorsprünge 72 härter als das Material der Bohrungswandung. Entsprechend ist am Expansionsorgan 1O nun anschliessend an die Sollbruchstelle 66 erst der Spreizteil 74 angeordnet, welcher bei Einziehen des Expansionsorgans 1O die vergüteten Rippen in das Wandungsmaterial treibt, und es folgt darnach der eigentliche Expansionsteil 62, welcher die Aussenwandung des Stopfens 7 dichtend an die Wandung der Bohrung 1 anpresst. Die sich vorzugsweise keilförmig verjüngende Form des Expansionsorgans 1O bewirkt, wie bereits bei der Ausführung gemäss Fig. 1O bzw. 11, dass die Belastung auf der Belastungsseite 5 den dichten Verschluss tendenziell vermehrt dichtend und vermehrt axial fest in die Bohrung treibt. Bei der Ausführungsvariante gemäss Fig. 13 weist der Stopfen 7 wiederum rohrstummelförmige Formen auf, mit vorzugsweise kegelstumpfförmig sich verjüngender Innenfläche 70. An seiner Aussenwandung weist er eine koaxiale Ringzahnung auf, wobei Zahnungsflanken 78, welche dem Ende des Stopfens 7 mit erweiterter Innenbohrung, d.h. der Belastungsseite 5, zugekehrt sind, gegen das andere Stopfenende geneigt sind, die anderen Zahnungsflanken 80 senkrecht zur Anordnungsachse A verlaufen oder gar im selben Sinne wie die Flanken 78 geneigt sind. Durch die Zahnungsflanken 78 und 80 entstehen Widerlagerflächen, die bei Eintreiben des Expansionsorgans 10 in das Wandungsmaterial eingreifen, wodurch die Dichtheit sichergestellt wird. Die Dichtheit, nich aber eine axiale Arretierung, wird bereits bei geringem Eingreifen vornehmlich durch die Dichtungsflanken 78 sichergestellt. Zur Gewährleistung eines auch für die axiale Sicherung ausreichenden Aufspreizens sind auch hier Schlitze 82 in der unteren Partie des Stopfens 7 vorgesehen, die als mechanische Arretierung allein wirkt.

## Patentansprüche

1. Verfahren zum dichten Verschliessen einer Bohrung, bei dem man einen im wesentlichen büchsen- oder rohrförmigen Stopfen in die Bohrung einlässt, ein Expansionsorgan in den Stopfen eintreibt und ihn durch radiales Aufspreizen in einem Dichtbereich dichtend an die Bohrungswand treibt, weiter den Stopfen gegen Verschiebung in Axialrichtung an einem von seinem Dichtbereich getrennten Sicherungsbereich bezüglich der Bohrungswand formschlüssig verankert, dadurch gekennzeichnet, dass man die Verankerung direkt über einen vom Dichtbereich getrennten und im Vergleich mit letzterem unterschiedliche Gestalt aufweisenden zusätzlichen, nur zur Sicherung dienenden Sicherungsbereich des Stopfens oder über das mit dem Stopfen in Wirkeingriff stehende Expansionsorgan zwischen Stopfen und Bohrungswand erstellt.

2. Verfahren nach Anspruch 1, dadurch gekennzeichnet, dass man den Stopfen vor dem Aufweiten in die Bohrung einschraubt.

3. Verfahren nach Anspruch 1, dadurch gekennzeichnet, dass man den Stopfen zur formschlüssigen Verankerung am Sicherungsbereich radial in mindestens eine Einnehmung an der Bohrungswandung aufweitet oder in die Bohrungswandung einpresst.

4. Verfahren nach Anspruch 1, dadurch gekennzeichnet, dass man am Stopfen mindestens einen radial federnden Sicherungsbereich vorsieht und letzteren in eine Einnehmung an der Bohrungswandung einschnappt.

5. Verfahren nach einem der Ansprüche 3 oder 4, dadurch gekennzeichnet, dass man mit dem Expansionsorgan die am Sicherungsbereich aufgeweitete bzw. eingeschnappte bzw. eingepresste Stopfenpartie radial bezüglich der Wandung der Bohrung widerlagert.

6. Verfahren nach einem der Ansprüche 1 bis 5, dadurch gekennzeichnet, dass man das Expansionsorgan durch Einschrauben in den Stopfen treibt.

7. Verfahren nach einem der Ansprüche 1 bis 6, dadurch gekennzeichnet, dass man das Expansionsorgan in die Bohrung einschraubt zum Eintreiben in den Stopfen und zu dessen axialer, formschlüssiger Verankerung bezüglich der Wand.

8. Verfahren nach Anspruch 7, dadurch gekennzeichnet, dass man eine Drehbewegungsübertragung von Expansionsorgan auf Stopfen verhindert.

9. Verfahren nach einem der Ansprüche 1 bis 8, dadurch gekennzeichnet, dass man das Expansionsorgan mit einem koaxialen Hohlraum versieht.

10. Verfahren nach einem der Ansprüche 1 bis 9, dadurch gekennzeichnet, dass man zum Aufweiten des Stopfens das Expansionsorgan in den Stopfen hineinzieht oder hineindrückt.

11. Dicht verschlossene Bohrungsanordnung, bei der ein im wesentlichen büchsen- oder rohrförmiger Stopfen durch ein im Stopfen angeordnetes Expansionsorgan an mindestens einem Dichtbereich dicht an die Bohrungswand gepresst ist und bei der der Stopfen an mindestens einem von dem Dichtbereich getrennten Sicherungsbereich bezüglich der Bohrung formschlüssig gegen axiale Verschiebung gesichert ist, dadurch gekennzeichnet, dass der von dem Dichtbereich getrennte und im Vergleich mit letzterem unterschiedlich gestalteter zusätzlicher, nur der Sicherung dienender Sicherungsbereich des Stopfens direkt oder über das mit dem Stopfen in Wirkeingriff stehende Expanisonsorgan an einer Wandungspartie formschlüssig gesichert ist.

12. Bohrungsanordnung nach Anspruch 11, dadurch gekennzeichnet, dass die Bohrung endständig eine Gewindepartie, vorzugsweise eine Innengewindepartie, aufweist.

13. Bohrungsanordnung nach einem der Ansprüche 11 oder 12, dadurch gekennzeichnet, dass der Stopfen an dem Sicherungsbereich umfasst: ein Aussengewinde und/oder eine über seine Mantelfläche auskragende Anschlagpartie und/oder eine über seine Mantelfläche radial ausspreizbare Anschlagpartie und/oder eine radial federnde Einhakpartie.

14. Bohrungsanordnung nach einem der Ansprüche 11 bis 13, dadurch gekennzeichnet, dass die Bohrung endständig mindestens eine radiale Einnehmung aufweist, vorzugsweise eine sich kreisförmig entlang eines wesentlichen Teils der Bohrungswandung erstreckende Nut.

15. Bohrungsanordnung nach einem der Ansprüche 11 bis 14, dadurch gekennzeichnet, dass an der Bohrungswandung eine radial federnde Ausformung vorgesehen ist, die im Ruhezustand radial nach innen über die Bohrungswandung auskragt.

16. Bohrungsanordnung nach einem der Ansprüche 11 bis 15, dadurch gekennzeichnet, dass das Expansionsorgan im Stopfen angeordnet ist.

17. Bohrungsanordnung nach einem der Ansprüche 11 bis 16, dadurch gekennzeichnet, dass das Expansionsorgan eine Spreizpartie aufweist, welche bei seinem Eintreiben die Sicherungspartie des Stopfens radial nach aussen treibt, zum Hintergreifen einer Einnehmung an der Bohrungswandung oder zum Eintreiben in die Bohrungswand.

18. Bohrungsanordnung nach einem der Ansprüche 11 bis 17, dadurch gekennzeichnet, dass das Expansionsorgan eine Sicherungspartie zur axialen Verankerung an der Bohrung aufweist.

19. Bohrungsanordnung nach einem der Ansprüche 11 bis 18, dadurch gekennzeichnet, dass der Stopfen rohrförmig ist, das Expansionsorgan einen durch diesen durchragenden Zuganker umfasst zum Eintreiben des Expansionsorgans in den Stopfen durch Zug am Zuganker.

20. Bohrungsanordnung nach einem der Ansprüche 11 bis 19, dadurch gekennzeichnet, dass der Sicherungsbereich am Stopfen radial ausragende oder austreibbare Partien zum Eingreifen in die Bohrungswand umfasst, die härter als das übrige Stopfenmaterial und das Bohrungswandungsmaterial sind.

21. Bohrungsanordnung nach einem der Ansprüche 11 bis 20, dadurch gekennzeichnet, dass der Stopfen, im Längsschnitt des Stopfens betrachtet, eine Zahnung aufweist, wobei diejenigen Zahnflanken, welche auf die mit niedrigerem Druck beaufschlagte Stopfenseite weisen, als Sicherungsbereich achssenkrecht ausgerichtet sind oder gegen diese Seite hin geneigt sind zur Bildung von Widerhakenflächen, die in die Bohrungswandung eingreifen.

22. Bohrungsanordnung nach einem der Ansprüche 11 bis 21, dadurch gekennzeichnet, dass das Expansionsorgan einen im wesentlichen koaxialen lichten Innenraum aufweist, um letzteren in den Stopfen hinein kaltzuziehen.

## Claims

1. A method for tight sealing a hole, comprising forcing an essentially bushing-or tube-shaped plug into the hole, radially expanding the plug by forcing an expander element into the interior of the plug to sealingly apply the plug against the hole wall and by separately and positively anchoring the plug against axial movement in the hole wall at an anchoring section distinct from the sealing section, characterized in that the anchoring between the plug and the hole wall is performed directly by means of an additional anchoring section of the plug serving for the anchoring only, separate form the sealing section and having a different shape when compared with the latter, or by means of the expander element operatively connected with the plug.

2. A method as claimed in Claim 1, characterized in that the plug is screwed into the hole before expanding the plug.

3. A method as claimed in Claim 1, characterized in that the positive anchoring of the plug at the anchoring section is achieved by radially forcing it into at least one recess within the wall or directly into the hole wall.

4. A method as claimed in Claim 1, characterized by providing on the plug at least one radial spring-like anchoring section and by snapping the spring-like section into a recess within the hole wall.

5. A method as claimed in any of Claims 3 or 4, characterized in that the expander element serves to anchor the part of the plug expanded, snapped-in or engaged at its anchoring section radially with respect to the wall of the hole.

6. A method as claimed in any of Claims 1 to 5, characterized in that the expander element is driven into the plug by screwing.

7. A method as claimed in any of Claims 1 to 6, characterized in that the expander element is screwed into the hole and is thus driven into the plug for positively axially anchoring at with respect to the wall.

8. A method as claimed in Claim 7, characterized in that transmission of rotary motion from the expander element to the plug is prevented.

9. A method as claimed in any of Claims 1 to 8, characterized in that the expander element is provided with a coaxial hollow space.

10. A method as claimed in any of Claims 1 to 9, characterized in that the expander element is one pulled into or pushed into the plug for expanding the plug.

11. A tightly sealed hole arrangement in which an essentially bushing- or tubular-shaped plug is tightly pressed along at least one sealing section against the hole wall by means of an expander element arranged inside the plug, and in which the plug is at least at one anchoring section distinct from the sealing section positively anchored in the hole against axial movement, characterized in that the additional anchoring section of the plug, distinct from the sealing section and of different shape with respect to the latter and serving only to the anchoring of the plug, is positively anchored to a section of the hole wall directly or by means of the expander element engaged into the plug.

12. An arrangement as claimed in Claim 11, characterized in that the end portion of the hole presents a threaded part, preferably an internal thread.

13. An arrangement as claimed in Claim 11 or 12, characterized in that the plug comprises in the anchoring section: An outer thread and/or a stop extending beyond its generated surface and/or a stop radially expandable beyond its generated surface and/or a radially yieldable hooking portion.

14. An arrangement as claimed in any of Claims 11 to 13, characterized in that the hole presents at its end at least one radial recess, preferably a circular groove extending about a substantial part of the hole wall.

15. An arrangement as claimed in any of Claims 11 to 14, characterized in that the hole wall has a radially expandable spring-portion within a recess extending in the state of rest radially inwardly beyond the hole wall.

16. An arrangement as claimed in any of Claims 11 to 15, characterized in that the expander element is arranged in the plug.

17. An arrangement as claimed in any of Claims 11 to 16, characterized in that the expander element comprises an expandable section which when driven into the plug will radially outwardly expand the anchoring section of the plug to thereby engage a recess in the hole wall or to be driven into the hole wall.

18. An arrangement as claimed in any of Claims 11 to 17, characterized in that the expander element comprises an anchoring section for being axially anchored at the hole.

19. An arrangement as claimed in any of Claims 11 to 18, characterized in that the plug has a tubular shape and the expander element comprises a pulling element extending therethrough for driving the expander element into the plug by exerting a pulling force on said pulling element.

20. An arrangement as claimed in any of Claims 11 to 19, characterized in that the anchoring section of the plug comprises radial projections or radially expandable parts to be driven into the hole wall, the projections or parts being made of a material harder than the material of the rest of the plug and harder than the material of the said wall.

21. An arrangement as claimed in any of Claims 11 to 20, characterized in that the plug, when seen in longitudinal section, comprises a toothing, whereby the tooth flanks directed towards the side of the plug under lower pressure are forming an anchoring section and are extending perpendicularly to the axis or are inclined towards this side to form barbed surfaces for gripping into the hole wall.

22. An arrangement as claimed in any of Claims 11 to 21, characterized in that the expander element has a substantially conical central cavity for cold-drawing the latter into the plug.

## Revendications

1. Procédé pour l'obturation étanche d'un perçage, selon lequel on introduit dans le perçage un bouchon sensiblement en forme de douille ou de tube, on enfonce dans le bouchon un organe expansible, on presse le bouchon de façon étanche contre la paroi du perçage grâce à un écartement radial dans une zone d'étanchéité, et au niveau d'une zone de blocage séparée de la zone d'étanchéité du bouchon, on immobilise ledit bouchon par complémentarité de forme à l'encontre d'un déplacement dans le sens axial par rapport à la paroi du perçage, caractérisé en ce qu'on réalise l'immobilisation entre le bouchon et la paroi du perçage directement par l'intermédiaire d'une zone de blocage supplémentaire du bouchon, séparée de la zone d'étanchéité et présentant une forme différente par rapport à celle-ci, et servant uniquement au blocage, ou par l'intermédiaire de l'organe expansible en prise fonctionnelle avec le bouchon.

2. Procédé selon la revendication 1, caractérisé en ce qu'on visse le bouchon dans le perçage avant l'élargissement.

3. Procédé selon la revendication 1, caractérisé en ce qu'on élargit le bouchon, en vue de l'immobilisation par complémentarité de forme au niveau de la zone de blocage, radialement dans au moins un creux de la paroi du perçage, ou on l'enfonce dans la paroi du perçage.

4. Procédé selon la revendication 1, caractérisé en ce qu'on prévoit sur le bouchon au moins une zone de blocage faisant ressort radialement et on enclenche cette zone de blocage dans un creux de la paroi du perçage.

5. Procédé selon l'une des revendications 3 ou 4, caractérisé en ce qu'on réalise, avec l'organe expansible, un contre-appui radial pour la partie de bouchon élargie ou enclenchée ou enfoncée au niveau de la zone de blocage, par rapport à la paroi du perçage.

6. Procédé selon l'une des revendications 1 à 5, caractérisé en ce qu'on enfonce l'organe expansible dans le bouchon par vissage.

7. Procédé selon l'une des revendications 1 à 6, caractérisé en ce qu'on visse l'organe expansible dans le perçage en vue de l'enfoncer dans le bouchon et d'immobiliser celui-ci axialement et par complémentarité de forme par rapport à la paroi.

8. Procédé selon la revendication 7, caractérisé en ce qu'on empêche la transmission d'un mouvement de rotation de l'organe expansif au bouchon.

9. Procédé selon l'une des revendications 1 à 8, caractérisé en ce qu'on dote l'organe expansible d'une cavité coaxiale.

10. Procédé selon l'une des revendications 1 à 9, caractérisé en ce que, pour élargir le bouchon, on introduit l'organe expansible dans le bouchon par traction ou par pression.

11. Agencement formant perçage obturé de façon étanche, avec lequel un bouchon sensiblement en forme de douille ou de tube est pressé de façon étanche contre la paroi du perçage, au niveau d'au moins une zone d'étanchéité, par un organe expansible disposé dans le bouchon, et avec lequel le bouchon est immobilisé par complémentarité de forme, au niveau d'au moins une zone de blocage séparée de la zone d'étanchéité, à l'encontre d'un déplacement axial par rapport à la paroi du perçage, caractérisé en ce que la zone de blocage supplémentaire du bouchon, séparée de la zone d'étanchéité et présentant une forme différente par rapport à celle-ci, et servant uniquement au blocage est bloquée directement ou par l'intermédiaire de l'organe expansible en prise fonctionnelle avec le bouchon, par complémentarité de forme, au niveau d'une partie de la paroi.

12. Agencement formant perçage selon la revendication 11, caractérisé en ce que le perçage présente à son extrémité une partie filetée, de préférence une partie pourvue d'un filetage intérieur.

13. Agencement formant perçage selon l'une des revendications 11 ou 12, caractérisé en ce que le bouchon comprend, au niveau de la zone de blocage : un filetage extérieur et/ou une partie de butée faisant saillie par rapport à sa surface latérale et/ou une partie de butée apte à s'écarter radialement par rapport à sa surface latérale et/ou une partie d'accrochage faisant ressort radialement.

14. Agencement formant perçage selon l'une des revendications 11 à 13, caractérisé en ce que le perçage présente, à son extrémité, au moins un creux radial, de préférence une rainure s'étendant en cercle le long d'une partie importante de la paroi du perçage.

15. Agencement formant perçage selon l'une des revendications 11 à 14, caractérisé en ce qu'il est prévu, au niveau de la paroi du perçage, une protubérance faisant ressort radialement, qui fait saillie radialement vers l'intérieur par rapport à la paroi du perçage, en position de repos.

16. Agencement formant perçage selon l'une des revendications 11 à 15, caractérisé en ce que l'organe expansible est disposé dans le bouchon.

17. Agencement formant perçage selon l'une des revendications 11 à 16, caractérisé en ce que l'organe expansible présente une partie extensible qui, lorsque ledit organe est enfoncé, presse la partie de blocage du bouchon radialement vers l'extérieur en vue de venir en prise par l'arrière dans un creux de la paroi du perçage ou de s'enfoncer dans la paroi du perçage.

18. Agencement formant perçage selon l'une des revendications 11 à 17, caractérisé en ce que l'organe expansible présente une partie de blocage destinée à l'immobilisation axiale au niveau du perçage.

19. Agencement formant perçage selon l'une des revendications 11 à 18, caractérisé en ce que le bouchon est en forme de tube et l'organe expansible comprend un élément de traction traversant ledit bouchon en vue d'enfoncer l'organe expansible dans le bouchon grâce à une traction au niveau dudit élément de traction.

20. Agencement formant perçage selon l'une des revendications 11 à 19, caractérisé en ce que la zone de blocage comprend, au niveau du bouchon, des parties faisant saillie radialement ou aptes à être pressées vers l'extérieur, qui sont destinées à venir en prise dans la paroi du perçage et qui sont plus dures que le reste du matériau du bouchon et que le matériau de la paroi du perçage.

21. Agencement formant perçage selon l'une des revendications 11 à 20, caractérisé en ce que le bouchon, considéré en coupe longitudinale, présente une denture, étant précisé que les profils de dents qui sont dirigés vers le côté du bouchon sollicité par une plus faible pression sont orientés perpendiculairement à l'axe, comme zone de blocage, ou sont inclinés vers ce côté pour former des surfaces barbelées qui viennent en prise dans la paroi du perçage.

22. Agencement formant perçage selon l'une des revendications 11 à 21, caractérisé en ce que l'organe expansible présente un espace intérieur libre sensiblement coaxial afin d'introduire à froid ledit organe expansible dans le bouchon.
